(19) **Europäisches Patentamt European Patent Office Office européen des brevets**

(11) **EP 4 759 952 A1**

(12) **EUROPEAN PATENT APPLICATION**
published in accordance with Art. 153(4) EPC

(43) Date of publication:
17.06.2026 Bulletin 2026/25

(51) International Patent Classification (IPC):
$C22C\ 38/00^{(2006.01)}$   $C21D\ 9/46^{(2006.01)}$
$C22C\ 18/00^{(2006.01)}$   $C22C\ 18/04^{(2006.01)}$
$C22C\ 38/58^{(2006.01)}$   $C23C\ 2/02^{(2006.01)}$
$C23C\ 2/06^{(2006.01)}$   $C23C\ 2/40^{(2006.01)}$
$B23K\ 11/16^{(2006.01)}$

(21) Application number: 24851332.7

(22) Date of filing: 07.05.2024

(52) Cooperative Patent Classification (CPC):
C21D 9/46; C22C 18/00; C22C 18/04; C22C 38/00;
C22C 38/58; C23C 2/02; C23C 2/06; C23C 2/40;
B23K 11/16

(86) International application number:
PCT/JP2024/016968

(87) International publication number:
WO 2025/032898 (13.02.2025 Gazette 2025/07)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 10.08.2023 JP 2023131192

(71) Applicant: Nippon Steel Corporation
Tokyo 100-8071 (JP)

(72) Inventors:
• **KIREKAWA, Naoto**
**Tokyo 100-8071 (JP)**
• **MITSUNOBU, Takuya**
**Tokyo 100-8071 (JP)**
• **URANAKA, Masaaki**
**Tokyo 100-8071 (JP)**
• **TAKEBAYASHI, Hiroshi**
**Tokyo 100-8071 (JP)**

(74) Representative: **Vossius & Partner Patentanwälte Rechtsanwälte mbB Siebertstraße 3 81675 München (DE)**

(54) **STEEL SHEET AND GALVANNEALED STEEL SHEET**

(57)    The present invention has as its object the provision of a steel sheet and hot dip galvannealed steel sheet excellent in LME resistance. The steel sheet of the present invention has a tensile strength of 780 MPa or more a depth where an emission intensity Bx at a depth x ($\mu$m) and an emission intensity B150 at a depth of 150 $\mu$m measured by GDS measurement in a thickness direction of the steel sheet satisfy Bx/B150 $\geq$ 5.0 is 0.5 $\mu$m or more from a surface of the steel sheet; a thickness of oxides formed on the surface of the steel sheet is 0.5 $\mu$m or less; and an internal oxidation layer of a thickness of 1.0 $\mu$m or more in a exists thickness direction of the steel sheet from the surface of the steel sheet. Further, the hot dip galvannealed steel sheet of the present invention comprises a hot dip galvannealed layer at least at part of the surface of the steel sheet and has a thickness of oxides formed at the surface of the hot dip galvannealed layer of 0.5 $\mu$m or less.

Fig. 1

EP 4 759 952 A1

**Description**

FIELD

The present invention relates to a steel sheet and a hot dip galvannealed steel sheet.

BACKGROUND

In recent years, the steel sheet used in automobiles, household electric appliance products, building materials, and other various fields has been made higher in strength. For example, in the automobile field, use of high strength steel sheet has been increasing for the purpose of lightening the weight of vehicle bodies for improving fuel efficiency.

In particular, in the automobile field, sometimes a steel sheet given galvanization is spot welded for use. In welding of a steel sheet given galvanization, in particular a high strength steel sheet, for example, as described in PTL 1, the drop in weldability due to liquid metal embrittlement (LME) cracking sometimes becomes a problem. LME cracking is believed to be caused by the surface layer part of a steel sheet transforming to austenite at the time of welding, molten zinc penetrating the grain boundaries causing the steel sheet to become embrittled, and further a tensile stress being applied to the steel sheet at the time of welding.

Note that PTL 2 discloses a steel sheet suppressed in LME cracking and improved in weldability which has particle size 20 nm or more Si oxide grains present at the surface layer part of the steel sheet in a 3000 to 6000/mm$^2$ number density in a suitable particle size distribution.

[CITATION LIST]

[PATENT LITERATURE]

[PTL 1] WO2019/116531
[PTL 2] WO2020/218575

SUMMARY

[TECHNICAL PROBLEM]

To prevent LME cracking, it is effective to keep the Zn etc. contained in plating from penetrating a steel sheet transformed to austenite. There is room for improvement on this point.

Further, if a high strength steel sheet is exposed to an air corrosive environment in which the air temperature and humidity greatly fluctuate, it is known that the hydrogen produced in the corrosive process penetrates the steel. The hydrogen penetrating the steel segregates at the martensite grain boundaries of the steel structures and causes the grain boundaries to become brittle and thereby can become causes of cracking in the steel sheet. The phenomenon of penetrating hydrogen causing cracking is called "hydrogen embrittlement cracking (delayed fracture) and often becomes a problem at the time of working steel sheet. To prevent this, when hydrogen penetrates into a steel sheet, it is effective to promote desorption of hydrogen from the steel sheet into the atmosphere.

The present invention, in consideration of such a situation, has as its object the provision of steel sheet and plated steel sheet having a high LME resistance and hydrogen desorption property.

[SOLUTION TO PROBLEM]

Improvement of the LME resistance of a steel sheet and a hot dip galvannealed steel sheet has been studied in various ways. As opposed to this, in the present invention, it was discovered that making B concentrate at the surface layer of a steel sheet is preferable. Further, it was discovered that the hydrogen desorption property is improved by making B concentrate at the surface layer at a steel sheet. This is believed because the surface diffusion rate of hydrogen atoms at the steel sheet surface layer where B concentrates becomes fast and the hydrogen gasification reaction is promoted. By making B concentrate at the surface layer of a steel sheet, in annealing, external oxidation at the surface of the steel sheet is not made to proceed. Oxidation proceeds at the surface layer of the steel sheet toward the inside of the steel sheet. It was discovered that promoting internal oxidation is effective. The present has the following as its gist:

[1] A steel sheet having a tensile strength of 780 MPa or more, wherein a chemical composition of the steel sheet comprises, by mass%, C: 0.05 to 0.40%, Si: 0.7 to 3.0%, Mn: 0.1 to 5.0%, sol. Al: 0 to 2.0%, P: 0.0300% or less, S: 0.0300% or less, N: 0.0100% or less, B: 0.0005 to 0.0050%, Ti: 0.0010 to 0.1000%, Nb: 0 to 0.2000%, V: 0 to 0.15%, Cr: 0 to 2.00%, Ni: 0 to 2.00%, Cu: 0 to 2.00%, Mo: 0 to 1.00%, W: 0 to 1.00%, Ca: 0 to 0.1000%, Mg: 0 to 0.100%, Zr: 0 to 0.100%, Hf: 0 to 0.100%, REM: 0 to 0.100% and a balance of Fe and impurities, a depth where an emission intensity Bx at a depth x ($\mu$m) and an emission intensity B150 at a depth of 150 $\mu$m measured by GDS measurement in a thickness direction of the steel sheet satisfy Bx/B150 $\geq$ 5.0 ...(1) is 0.5 $\mu$m or more from a surface of the steel sheet, a thickness of oxides formed on the surface of the steel sheet is 0.5 $\mu$m or less, and an internal oxidation layer of a thickness of 1.0 $\mu$m or more exists in a thickness direction of the steel sheet from the surface of the steel sheet.

[2] The steel sheet of [1], wherein the depth where the emission intensity Bx and the emission intensity B150 satisfy Bx/B150 $\geq$ 5.0 is 2.0 $\mu$m or more from the surface of the steel sheet.

[3] The steel sheet of [1], wherein, a maximum value Bmax of the emission intensity of B in a range from the surface of the steel sheet down to a depth of 5.0 $\mu$m measured by GDS measurement in the thickness direction of the steel sheet satisfies Bmax/B150 $\geq$ 8...(2)

[4] A hot dip galvannealed steel sheet comprising a steel sheet of any one of [1] to [3], and a hot dip galvannealed layer provided on at least part of the surface, wherein a thickness of the oxides formed on the surface of the hot dip galvannealed layer is 0.5 $\mu$m or less.

[5] The hot dip galvannealed steel sheet of [4], wherein the hot dip galvannealed layer comprises, by mass%, 0 to 1.5% of Al, 3 to 20% of Fe and a balance of Zn and impurities.

[ADVANTAGEOUS EFFECTS OF INVENTION]

According to the present invention, it is possible to obtain a steel sheet and hot dip galvannealed steel sheet having an excellent LME resistance.

BRIEF DESCRIPTION OF DRAWINGS

FIG. 1 is a view for showing one example of the distribution of B at a surface layer part of the steel sheet of the present invention.
FIG. 2 is a view for explaining a position of cracking covered in evaluation of LME resistance in an embodiment.

DESCRIPTION OF EMBODIMENTS

Below, one embodiment of the present invention will be explained. The present invention is not limited to the following embodiment. First, a summary of the improvement of LME resistance in the present embodiment will be explained.

If spot welding a plated steel sheet, along with the plating melting, the surface layer part of the steel sheet will be heated and the steel sheet structures will transform to austenite. At that time, the molten plating will penetrate the steel sheet structures along the grain boundaries of the austenite and the crystal grain boundaries will become brittle. For this reason, if stress is applied to the steel sheet, LME cracking will easily occur at the crystal grain boundaries. In particular, it is believed that LME easily occurs since tensile stress is applied to steel sheet at the time of welding. The inventors came up with the idea of using B (below, sometimes also referred to as "boron") as the method of improving the LME resistance. Specifically, they came up with the idea of making B segregate at the Fe grain boundaries in the surface layer structures (austenite grain boundaries or ferrite grain boundaries) so as to suppress penetration of molten zinc to the Fe grain boundaries and suppress occurrence of LME. Note that, in this Description, the "surface layer" means the range from the surfacemost part of the steel sheet down to 100 $\mu$m or so in the sheet thickness direction.

In general, in boron steel, in particular when heating to the austenite temperature region, there is known a deboronation phenomenon where the amount of B near the surface decreases. As a result, in general, in boron steel, the concentration of B at the steel surface layer falls compared with the center part of the steel sheet. In the present embodiment, internal oxidation, which easily proceeds at the crystal grain boundaries at the surface layer of a steel sheet when annealing the steel sheet, is caused toward the inside direction of the steel sheet. Due to this, an internal oxidation layer is formed inside the surface layer of the steel sheet, therefore in particular it becomes possible to fix the Si causing the LME resistance to degrade as oxides. Furthermore, the oxides formed by the internal oxidation take in the B diffusing from inside the steel sheet to the surface layer due to heating, whereby the deboronation phenomenon is suppressed. In this way, opposite to usual boron steel, a region where B is concentrated is formed at the surface layer of the steel. Due to the effect of the combination of these factors, the LME resistance is improved.

Usually, when heating a steel sheet like with annealing, oxides (scale) are formed at the steel sheet surface as external oxidation. In the present embodiment, it was found that by imparting strain to the surface layer of a steel sheet in advance to promote the diffusion of oxygen to the inside of the material and performing annealing at a suitable dew point, it is possible to promote internal oxidation without promoting external oxidation. Based on this finding, the above-mentioned structures of the surface layer of steel sheet were realized.

Below, the present embodiment will be explained in detail.

<<Steel Sheet>>

Below, a steel sheet of the present embodiment will be explained in detail.

[Tensile Strength]

The steel sheet of the present embodiment has a tensile strength of 780 MPa or more. The present embodiment is one which suppresses LME occurring in a high strength steel sheet, therefore the steel sheet according to the present embodiment is high strength. Specifically has a 780 MPa or more tensile strength. The upper limit of the tensile strength is not particularly prescribed, but from the viewpoint of securing toughness, it may for example be 2000 MPa or less. The tensile strength is measured by taking a JIS No. 5 tensile test piece having a direction perpendicular to the rolling direction as its longitudinal direction and performing a test based on JIS Z 2241: 2011. The tensile strength may also be 980 MPa or more or 1180 MPa or more.

[Chemical Composition of Steel Sheet]

Below, the chemical composition of the steel sheet of the present embodiment will be explained. Below, the "%" relating to the chemical composition of the steel sheet shall mean "mass%". Further, in the numerical ranges in the chemical composition, a numerical range expressed using "to" will mean a range including the numerical values before and after the "to" as an upper limit value and a lower limit value.

(C: 0.05 to 0.40%)

C (carbon) is an element securing the strength of steel. To obtain the 780 MPa or more of tensile strength targeted by the present embodiment, the content of C is 0.05% or more. Considering the weldability, the content of C is 0.40% or less. The content of C may also be 0.08% or more, 0.10% or more, or 0.15% or more. The content of C may also be 0.37% or less, 0.35% or less, or 0.30% or less.

(Si: 0.7 to 3.0%)

Si (silicon) is an element suppressing the deboronation phenomenon by internal oxidation. Further, it is an element improving the corrosion resistance of steel. Due to this, the later explained B distribution is formed at the surface layer of the steel sheet. To obtain this effect, the content of Si is 0.7% or more. If the content of Si is too large, since Si is an element generally lowering the LME resistance, the effect of the B distribution explained later is obstructed and the effect of improvement of the LME resistance becomes smaller. Considering this point, the content of Si is 3.0% or less. The content of Si may also be 0.8% or more, 0.9% or more, or 1.0% or more. The content of Si may also be 2.8% or less, 2.5% or less, or 2.0% or less.

In the past, it had been known that the LME resistance is made to fall by addition of Si into the steel. The inventors studied this and as a result, opposite to the conventional knowledge, discovered that the LME resistance is improved by including Si in large amounts. This is believed to be due to the later explained inclusion of B and method of production causing B to concentrate at the surface layer part and segregate at the Fe grain boundaries.

(Mn: 0.1 to 5.0%)

Mn (manganese) is an element effective for obtaining hard structures and improving the strength of the steel. Further, in the same way as Si, it is also an element inhibiting the deboronation phenomenon by internal oxidation. To obtain these effects, the lower limit of the content of Mn is 0.1% or more. Further, considering the drop in formability due to Mn segregation, the content of Mn is 5.0% or less. The content of Mn may also be 0.5% or more, 1.0% or more, or 1.5% or more. The content of Mn may also be 4.5% or less, 4.0% or less, or 3.5% or less.

(sol. Al: 0 to 2.0%)

Al (aluminum) is an element which dissolves in steel and promotes ferrite stabilization and decarburization. Due to this, it is possible to improve the LME resistance, therefore this may be contained in accordance with need. "sol. Al" means acid soluble Al not forming $Al_2O_3$ or other oxides and able to be dissolved by acid. It is found as Al measured after deducting the insoluble residue on the filter paper formed in the process of analysis of Al. Inclusion of sol. Al is not essential. The lower limit of the content of sol. Al is 0. To obtain the effect of inclusion, the content of sol. Al may be 0.1% or more, 0.2% or more, or 0.3% or more. If the content of sol. Al is too great, even if performing high dew point annealing, external oxidation proceeds, oxides (scale) are formed at the surface layer of the steel sheet, and the LME resistance falls. Considering this point, the content of sol. Al is 2.0% or less. The content of Al may also be 1.5% or less, 1.2% or less, or 1.0% or less.

(P: 0.0300% or Less)

P (phosphorus) is an impurity generally contained in steel. If the content of P is more than 0.0300%, the weldability is liable to fall. Therefore, the content of P is 0.0300% or less. The content of P may also be 0.0200% or less, 0.0100% or less, or 0.0050% or less. P is preferably not contained. The lower limit of the content of P is 0. From the viewpoint of the dephosphorization cost, the content of P may be more than 0% or 0.0001% or more.

(S: 0.0300% or Less)

S (sulfur) is an impurity generally contained in steel. If the content of S is more than 0.0300%, the weldability is liable to fall and further the amount of precipitation of MnS is liable to increase and the bendability and other formability to fall. Therefore, the content of S is 0.0300% or less. The content of S may also be 0.0100% or less, 0.0050% or less, or 0.0020% or less. S is preferably not contained. The lower limit of the content of S is 0. From the viewpoint of the desulfurization cost, the content of S may be more than 0% or 0.0001% or more.

(N: 0.0100% or Less)

N (nitrogen) is an impurity generally contained in steel. If the content of N is more than 0.0100%, the weldability is liable to fall. Therefore, the content of N is 0.0100% or less. The content of N may also be 0.0080% or less, 0.0050% or less, or 0.0030% or less. N is preferably not contained. The lower limit of the content of N is 0. From the viewpoint of the production cost, the content of N may be more than 0% or 0.0010% or more.

(B: 0.0005 to 0.0050%)

B (boron) is an element raising the hardenability to contribute to the improvement of strength and, further, segregating at the grain boundaries to strength the grain boundaries and improve the toughness. Further, in the steel sheet of the present embodiment, it concentrates at the surface layer of the steel sheet and is present segregated at the Fe grain boundaries. To obtain this effect, the content of B is 0.0005% or more. From the viewpoint of the toughness and weldability, the content of B is 0.0050% or less. The content of B may also be 0.0006% or more, 0.0008% or more, or 0.0010% or more. The content of B may also be 0.0040% or less, 0.0030% or less, or 0.0020% or less.

In general, at the steel surface layer, the deboronation phenomenon causes the concentration of B to fall compared with the center part of the steel sheet. In the present embodiment, using the later explained method of production, internal oxidation toward the inside of the steel sheet is promoted in the annealing step to cause B to be taken in at the oxides and suppress the deboronation phenomenon and form the later explained distribution of concentration at the surface layer of the steel. The B segregated at the Fe grain boundaries is believed to suppress LME.

(Ti: 0.0010 to 0.1000%)

Ti (titanium) is an element precipitating as TiC during cooling of steel and contributing to improvement of the strength. To obtain this effect, the content of Ti is 0.0010% or more. If excessively added, coarse TiN is formed and the toughness is liable to be impaired, therefore the content of Ti is 0.1000% or less. The content of Ti may also be 0.0020% or more, 0.0030% or more, 0.0040% or more, 0.0080% or more, 0.0110% or more, or 0.0130% or more. The content of Ti may also be 0.0900% or less, 0.0800% or less, 0.0600% or less, 0.0500% or less, or 0.0400% or less.

(Nb: 0 to 0.2000%)

Nb (niobium) is an element contributing to improvement of strength through improvement of the hardenability, therefore may be contained in accordance with need. It is not an essential element, therefore the lower limit of the content of Nb is 0. This effect is obtained even with a trace amount of content, but if contained, the content of Nb may be 0.0001% or more, 0.0002% or more, 0.0003% or more, 0.0004% or more, or 0.0010% or more. From the viewpoint of securing the toughness, the content of Nb is 0.2000% or less. The content of Nb may also be 0.1500% or less, 0.1000% or less, 0.0600% or less, 0.0400% or less, 0.0200% or less, 0.0100% or less, 0.0050% or less, 0.0030% or less, or 0.0020% or less.

(V: 0 to 0.15%)

V (vanadium) is an element contributing to improvement of strength through improvement of the hardenability, therefore may be contained in accordance with need. It is not an essential element, therefore the lower limit of the content of V is 0. This effect is obtained even with a trace amount of content, but if contained, the content of V may be 0.001% or more, 0.01% or more, 0.03% or more, 0.05% or more, or 0.06% or more. From the viewpoint of securing the toughness, the content of V is 0.15% or less. The content of V may also be 0.14% or less, 0.13% or less, 0.12% or less, 0.11% or less, or 0.10% or less.

(Cr: 0 to 2.00%)

Cr (chromium) is effective for raising the hardenability of steel to raise the strength of the steel, therefore may be contained in accordance with need. It is not an essential element, therefore the lower limit of the content of Cr is 0. This effect is obtained even with a trace amount of content, but if contained, the content of Cr may be 0.001% or more, 0.01% or more,, 0.05% or more, 0.07% or more, or 0.10% or more. If excessively containing Cr, Cr carbides are formed in large amounts and conversely the hardenability is liable to be impaired, therefore the content of Cr is 2.00% or less. The content of Cr may also be 1.80% or less, 1.50% or less, 1.20% or less, 0.80% or less, 0.60% or less, 0.50% or less, 0.30% or less, or 0.20% or less.

(Ni: 0 to 2.00%)

Ni (nickel) is effective for raising the hardenability of steel to raise the strength of the steel, therefore may be contained in accordance with need. It is not an essential element, therefore the lower limit of the content of Ni is 0. This effect is obtained even with a trace amount of content, but if contained, the content of Ni may be 0.001% or more, 0.01% or more, 0.02% or more, 0.03% or more, 0.04% or more, or 0.05% or more. Excessive addition of Ni causes the costs to rise, therefore the content of Ni is 2.00% or less. The content of Ni may also be 1.80% or less, 1.50% or less, 1.20% or less, 0.80% or less, 0.60% or less, 0.50% or less, 0.40% or less, 0.20% or less, or 0.15% or less.

(Cu: 0 to 2.00%)

Cu (copper) is effective for raising the hardenability of steel to raise the strength of the steel, therefore may be contained in accordance with need. It is not an essential element, therefore the lower limit of the content of Cu is 0. This effect is obtained even with a trace amount of content, but if contained, the content of Cu may be 0.001% or more, 0.01% or more, 0.02% or more, 0.03% or more, 0.05% or more, or 0.07% or more. From the viewpoint of suppression of a drop in toughness or cracking of the slab after casting or a drop in weldability, the content of Cu is 2.00% or less. The content of Cu may also be 1.80% or less, 1.50% or less, 1.20% or less, 1.00% or less, 0.80% or less, 0.60% or less, 0.50% or less, 0.30% or less, or 0.20% or less.

(Mo: 0 to 1.00%)

Mo (molybdenum) is effective for raising the hardenability of steel to raise the strength of the steel, therefore may be contained in accordance with need. It is not an essential element, therefore the lower limit of the content of Mo is 0. This effect is obtained even with a trace amount of content, but if contained, the content of Mo may be 0.001% or more, 0.01% or more, 0.02% or more, 0.03% or more, 0.05% or more, or 0.06% or more. From the viewpoint of suppressing a drop in toughness, the content of Mo is 1.00% or less. The content of Mo may also be 0.80% or less, 0.60% or less, 0.40% or less, 0.30% or less, 0.20% or less, or 0.15% or less.

(W: 0 to 1.00%)

W (tungsten) is effective for raising the hardenability of steel to raise the strength of the steel, therefore may be contained in accordance with need. It is not an essential element, therefore the lower limit of the content of W is 0. This effect is obtained even with a trace amount of content, but if contained, the content of W may be 0.001% or more, 0.01% or more, 0.02% or more, or 0.03% or more. From the viewpoint of suppressing a drop in toughness, the content of W is 1.00% or less. The content of W may also be 0.80% or less, 0.60% or less, 0.40% or less, 0.30% or less, 0.20% or less, 0.15% or less, or 0.10% or less.

(Ca: 0 to 0.1000%)

Ca (calcium) is an element contributing to the control of inclusions, in particular the fine dispersion of inclusions, and having the action of raising the toughness, therefore may be contained in accordance with need. It is not an essential element, therefore the lower limit of the content of Ca is 0. This effect is obtained even with a trace amount of content, but if contained, the content of Ca may also be 0.0001% or more, 0.0005% or more, 0.0010% or more, 0.0020% or more, 0.0040% or more, 0.0060% or more, or 0.0070% or more. If excessively including Ca, sometimes deterioration of the surface properties surfaces, therefore the content of Ca is 0.1000% or less. The content of Ca may also be 0.0800% or less, 0.0600% or less, 0.0500% or less, 0.0400% or less, 0.0300% or less, or 0.0200% or less.

(Mg: 0 to 0.100%)

Mg (magnesium) is an element contributing to the control of inclusions, in particular the fine dispersion of inclusions, and having the action of raising the toughness, therefore may be contained in accordance with need. It is not an essential element, therefore the lower limit of the content of Mg is 0. This effect is obtained even with a trace amount of content, but if contained, the content of Mg may be 0.0001% or more, 0.0005% or more, or 0.001% or more. If excessively containing Mg, sometimes deterioration of the surface properties surfaces, therefore the content of Mg may also be 0.100% or less, 0.090% or less, 0.080% or less, 0.060% or less, 0.040% or less, 0.030% or less, 0.020% or less, 0.010% or less, 0.005% or less, 0.003% or less, or 0.002% or less.

(Zr: 0 to 0.100%)

Zr (zirconium) is an element contributing to the control of inclusions, in particular the fine dispersion of inclusions, and having the action of raising the toughness, therefore may be contained in accordance with need. It is not an essential element, therefore the lower limit of the content of Zr is 0. This effect is obtained even with a trace amount of content, but if contained, the content of Zr is preferably 0.001 % or more, 0.003% or more, 0.005% or more, 0.008% or more, or 0.010% or more. If excessively containing Zn, sometimes deterioration of the surface properties surfaces, therefore the content of Zr is 0.100% or less. The content of Zr may also be 0.090% or less, 0.080% or less, 0.060% or less, 0.050% or less, 0.040% or less, or 0.030% or less.

(Hf: 0 to 0.10%)

Hf (hafnium) is an element contributing to the control of inclusions, in particular the fine dispersion of inclusions, and having the action of raising the toughness, therefore may be contained in accordance with need. It is not an essential element, therefore the lower limit of the content of Hf is 0. This effect is obtained even with a trace amount of content, but if contained, the content of Hf may also be 0.001% or more, 0.002% or more, or 0.005% or more. If excessively containing Hf, sometimes deterioration of the surface properties surfaces, therefore the content of Hf is 0.10% or less, 0.08% or less, 0.06% or less, 0.05% or less, 0.04% or less, 0.03% or less, or 0.02% or less.

(REM: 0 to 0.100%)

A REM (rare earth element) is an element contributing to control of inclusions, in particular to finely dispersing inclusions, and having the action of raising the toughness, therefore may be contained in accordance with need. It is not an essential element, therefore the lower limit of the content of a REM is 0%. This effect is obtained even when contained in a trace amount, but if contained, the content of a REM may also be 0.001% or more, 0.002% or more, 0.003% or more, or 0.005% or more. If excessively containing a REM, sometimes deterioration of the surface properties surfaces, therefore the content of a REM is 0.100% or less. The content of a REM may also be 0.090% or less, 0.080% or less, 0.060% or less, 0.050% or less, 0.040% or less, 0.030% or less, 0.020% or less, 0.015% or less, or 0.010% or less. Note that "REM" is an abbreviation for a rare earth metal and means an element belonging to the lanthanoids. A REM is usually added as a misch metal.

(Balance)

In the steel sheet according to the present embodiment, the balance beside the above chemical composition is Fe and impurities. Here, "impurities" are constituents entering due to various factors in the production process such as the ore, scraps, and other such starting materials when industrially producing steel sheet and not having a detrimental effect on the LME resistance and hydrogen desorption property of the steel sheet according to the present embodiment. That is, they mean constituents contained in a range giving the LME resistance and hydrogen desorption property sought in the steel sheet of the present embodiment. As a specific element, for example, O (oxygen) may be mentioned. The content of O contained as an impurity may also be 0.0500% or less, 0.0300% or less, 0.0200% or less, or 0.0100% or less. However, from the viewpoint of the production costs, the content of O may be 0.00001% or more 0.00005% or more, or 0.0001% or more.

(Method of Analysis of Chemical Composition)

The chemical composition of the steel sheet may be analyzed using an elemental analysis method known to persons skilled in the art. For example, it is analyzed by inductively coupled plasma - mass spectrometry (ICP-MS method). However, C and S may be measured using the combustion-infrared absorption method, while N can be measured using the inert gas melting-thermal conductivity method. For O, the inert gas melting-infrared absorption method is used. These analyses may be performed on a sample taken from the steel sheet by a method based on JIS G0417: 1999.

[B Distribution of Surface Layer]

In the steel sheet of the present embodiment, in measurement by GDS (high frequency glow discharge optical emission spectrometry) in the thickness direction of the steel sheet, the depth satisfying the following formula (1) is 0.5 $\mu$m or more from the surface of the steel sheet.

$$Bx/B150 \geq 5.0 \quad \ldots(1)$$

In the above formula (1), Bx indicates the emission intensity at a point separated from the interface of the steel sheet and plating layer by a depth x ($\mu$m) in a thickness direction of the steel sheet. Further, B150 indicates the emission intensity at a depth of 150 $\mu$m from the interface of the steel sheet and plating layer in the thickness direction of the steel sheet. Note that, the "thickness direction" in the present embodiment means the direction vertical to the interface of the steel sheet and plating layer. The "point separated from the interface of the steel sheet and plating layer in the thickness direction of the steel sheet" is the point separated toward the center direction of the steel sheet thickness.

The left side of the above formula (1) shows the ratio of the B concentration at the depth "x" with respect to the B concentration at the depth 150 $\mu$m. That is, Bx/B150 $\geq$ 5.0 means that the B concentration at the depth "x" is 5.0 times or more the B concentration at the depth 150 $\mu$m. The B concentration at the depth 150 $\mu$m may be deemed the B concentration at the center of thickness of the steel sheet. Bx/B150 $\geq$ 5.0 means B is concentrated at the depth "x". The "depth satisfying formula (1) being 0.5 $\mu$m or more from the surface of the steel sheet" means formula (1) is satisfied in the range from the surface of the steel sheet down to a depth of 0.5 $\mu$m or more in the thickness direction of the steel sheet and means that B is concentrated in the range down to a depth of 0.5 $\mu$m or more in the thickness direction of the steel sheet.

The surface of the steel sheet in the present embodiment is defined as the point where the content of Fe found by GDS measurement becomes 5% of the content of Fe at the depth of 150 $\mu$m. Note that if forming the later explained hot dip galvannealed layer on the surface of the steel sheet, the interface of the steel sheet and hot dip galvannealed layer is deemed the surface of the steel sheet and is made the starting point of the depth in GDS measurement. The interface of the steel sheet and galvannealed layer is determined as follows: First, the Fe content in the thickness direction of the plated steel sheet is measured by GDS measurement. The highest value of this Fe content is deemed the Fe content of the steel sheet. The point where the Fe content becomes 93% of the Fe content of the steel sheet is defined as the "interface of the steel sheet and hot dip galvannealed layer."

By B concentrating at the surface layer of the steel sheet as explained above, B segregates at the Fe grain boundaries of the surface structures. Due to this, it is possible to keep molten zinc from penetrating the Fe grain boundaries at the time of spot welding and suppress occurrence of LME. Further, it is possible to improve the hydrogen desorption property of the steel sheet.

(Method of Measurement of GDS)

Bx, B150 are found by GDS. The surface of the steel sheet covered is rendered an Ar atmosphere, voltage is applied to generate plasma, and, in that state, the steel sheet surface is sputtered to analyze elements in the depth direction. The elements included in the material are identified from the emission spectrum wavelengths unique to the elements emitted due to atoms excited in the glow plasma. The emission intensities of the identified elements are also estimated.

Data of the depth direction can be estimated from the sputter time. Specifically, it is possible to use standard samples in advance to find the relationship between the sputter time and sputter depth and convert the sputter time to the sputter depth. Therefore, the sputter depth converted from the sputter time can be defined as the depth from the surface of the material. The sputter time is set so that the sputter depth becomes at least higher than 150 $\mu$m.

GDS measurement is performed five times in the sheet thickness direction and the average of the values found is deemed the B concentration. The measurement conditions are as follows: The B concentrations corresponding to x ($\mu$m) depth and 150 $\mu$m depth respectively are Bx, B150.

Apparatus: high frequency glow discharge optical emission spectrometry apparatus (made by LECO Japan Corporation, Model Name "GDS850A"

Ar gas pressure: 0.3 MPa
Anode diameter: 4 mm$\varphi$
RF output: 30W
Measurement time: 200 to 1500 seconds

To obtain the effect of suppression of occurrence of LME, the depth satisfying Bx/B150 $\geq$ 5.0 is 0.5 $\mu$m or more. From the viewpoint of the LME resistance, a larger Bx/B150 is preferable. It may be 1.0 $\mu$m or more, 1.2 $\mu$m or more, 1.4 $\mu$m or more, 1.6 $\mu$m or more, 1.8 $\mu$m or more, or 2.0 $\mu$m or more. Bx/B150 is the ratio of the B concentration at the depth "x" with respect to the B concentration at the depth 150 $\mu$m, therefore the depth satisfying Bx/B150 $\geq$ 5.0 is less than 150 $\mu$m. Even if the depth satisfying Bx/B150 $\geq$ 5.0 is made deeper, the LME resistance will not fall, but the depth satisfying Bx/B150 $\geq$ 5.0 may be 100.0 $\mu$m or less, 50.0 $\mu$m or less, 30.0 $\mu$m or less, 20.0 $\mu$m or less, or 10.0 $\mu$m or less.

In the steel sheet of the present embodiment, it is believed that LME is suppressed by the B concentrating at the surface layer of the steel in this way segregating at the Fe grain boundaries and suppressing penetration of Zn. Such a B distribution of the surface layer can be obtained by producing the plated steel sheet by the later explained method of production from molten steel having the above-mentioned chemical composition.

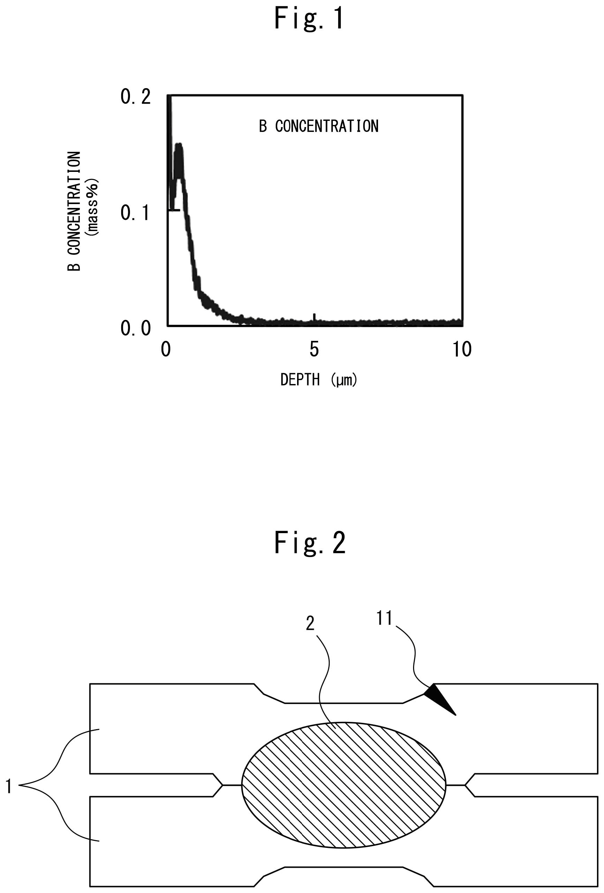

FIG. 1 shows one example of the distribution of B obtained by GDS measurement at the surface layer of the steel sheet of the present embodiment. Referring to FIG. 1, it can be confirmed that the B concentration rapidly rises from a position of a depth of about 2 $\mu$m from the surface to the surface (position of depth of 0 $\mu$m).

[Thickness of Oxides]

In the steel sheet of the present embodiment, the thickness of the oxides formed at the surface of the steel sheet or the surface of the hot dip galvannealed layer if provided with the later explained hot dip galvannealed layer is 0.5 $\mu$m or less. If thick oxides of more than 0.5 $\mu$m are formed at the surface of the plating layer, since the rate of diffusion of hydrogen falls in the oxides, the hydrogen desorption property falls. To make the thickness of oxides at the surface of the plating layer 0.5 $\mu$m or less, it is necessary to avoid heat treatment at an atmospheric furnace etc. after the steel sheet, or the hot dip galvannealed steel sheet, is produced.

The thickness of the oxides at the surface of the plating layer is measured by examination of the cross-section by SEM. Specifically, locations in which O is contained in 20% or more by EDS are defined as oxides and the thickness of the oxides is measured. The measurement field is made a horizontal 80 $\mu$m$\times$vertical 50 $\mu$m. The oxide thickness of the thickest part in the field is measured. Similar measurement is conducted on five fields. The average of the maximum oxide thicknesses of the fields is made the "surface oxide thickness". The thinner the oxide thickness of the surface of the plating layer, the more preferable. It may be 0.4 $\mu$m or less, 0.3 $\mu$m or less, 0.2 $\mu$m or less, or 0.1 $\mu$m or less.

[Thickness of Internal Oxidation Layer]

In the plated steel sheet of the present embodiment, there is an internal oxidation layer of a thickness of 1.0 $\mu$m or more present in the thickness direction of the steel sheet from the surface of the steel sheet or, if provided with a later explained hot dip galvannealed layer, the interface of the steel sheet and hot dip galvannealed layer. Due to Si and Mn precipitating as internal oxides, the concentrations of Si and Mn dissolved in the steel sheet surface layer fall. In particular, Si is an element promoting LME and causing the LME resistance to fall, therefore if the concentration of solute Si of the steel sheet surface layer falls due to internal oxidation, the LME resistance is improved. The thickness of the internal oxidation layer may be 2.0 $\mu$m or more, 3.0 $\mu$m or more, 4.0 $\mu$m or more, 5.0 $\mu$m or more, 6.0 $\mu$m or more, and 7.0 $\mu$m or more. The thickness of the internal oxidation layer may also be 100.0 $\mu$m or less, 50.0 $\mu$m or less, 40.0 $\mu$m or less, 30.0 $\mu$m or less, or 25.0 $\mu$m or less.

The thickness of the internal oxidation layer is measured by examination of the cross-section by SEM. Specifically, in the steel sheet surface layer, or the steel sheet surface layer right below the hot dip galvannealed layer if provided with a later explained hot dip galvannealed layer, precipitates in which O is contained in 20% or more by EDS are defined as internal oxides and the thickness of the internal oxidation layer is measured. The size of the measurement field is made a horizontal 80 $\mu$m$\times$vertical 50 $\mu$m. The thickest internal oxidation layer thickness in the field is measured. Similar measurement is conducted on five fields. The average of the maximum internal oxidation layer thicknesses of the fields is made the" internal oxidation layer thickness".

<B Concentration in Range Down to 5.0 $\mu$m Depth>

In the steel sheet of the present embodiment, in the above-mentioned GDS measurement, the following formula (2) is preferably satisfied.

$$\text{Bmax/B150} \geq 8 \ \ldots(2)$$

In the above formula (2), Bmax is the maximum value of the emission intensity of B in the range from the surface of the steel sheet down to a depth of 5.0 $\mu$m.

The left side of formula (2) shows the ratio of the maximum value of the emission intensity of B in the range from the surface of the steel sheet down to a depth of 5.0 $\mu$m with respect to the B concentration at the depth of 150 $\mu$m. That is, Bmax/B150 $\geq$ 8 means the B concentration at the position where B is most concentrated in the range from the surface of the steel sheet down to a depth of 5.0 $\mu$m is 8 times or more of the B concentration at the depth of 150 $\mu$m. The B concentration at the depth of 150 $\mu$m may be deemed the "B concentration at the center of sheet thickness of the steel sheet". Bmax/B 150 $\geq$ 8 means that the concentration of B is large from the surface of the steel sheet down to 5.0 $\mu$m, that is, in the vicinity of the surface.

Bmax/B150 is preferably large from the viewpoint of the LME resistance. It is preferably 10 or more, more preferably 12 or more, 14 or more, or 16 or more.

Satisfying formula (2) is not essential in the steel sheet of the present embodiment. Even if not satisfying formula (2), if satisfying formula (1), an excellent LME resistance can be obtained. By making the B distribution of the surface layer one satisfying formula (2), the B concentrating more greatly at the surface layer of the steel segregates at the Fe grain boundaries and can keep molten zinc from penetrating them, therefore the effect of suppression of LME can be obtained more greatly.

<<Hot Dip Galvannealed Steel Sheet>>

The surface of the steel sheet according to the present embodiment can be formed with a hot dip galvannealed layer to obtain a hot dip galvannealed steel sheet. The hot dip galvannealed layer may be formed on one surface of the steel sheet or may be formed on both surfaces. It may also be formed on just part of a surface. The hot dip galvannealed steel sheet of the present embodiment is mainly used in the automobile field. The hot dip galvannealing is not particularly limited so long as a plating containing Zn. As elements other than Zn, for example, Fe, Al, Mg, Si, Ni, Sn, and other elements generally contained in a Zn plating may be contained. Further, the elements contained in the steel sheet may be diffused and may be contained in the plating. The content of Zn may be 50% or more or may be 55% or more or 60% or more.

[Chemical Composition of Hot Dip Galvannealed Layer]

Below, one example of the chemical composition of the hot dip galvannealed steel sheet according to the present embodiment will be explained. The "%" relating to the content of the elements unless otherwise indicated means "mass%". Further, in the numerical ranges in the chemical composition regarding the plating layer, a numerical range expressed using "to" unless otherwise indicated will mean a range including the numerical values before and after the "to" as an upper limit value and a lower limit value.

(Al: 0 to 1.5%)

Al is an element which, by addition combined with Zn, improves the corrosion resistance of the plating layer, therefore may be contained in accordance with need. The content of Al may also be 0%. To form a plating layer containing Zn and Al, the content of Al is preferably 0.01% or more. The content of Al may also be 0.1% or more. If the Al in the plating layer is 0.3 to 1.5% in range, due to the effect of the Al, the speed of penetration of Zn into the steel grain boundaries is greatly reduced and the LME resistance can be improved. Therefore, from the viewpoint of improvement of the LME resistance, the Al in the plating layer is preferably 0.3 to 1.5%. The content of Al may also be 0.4% or more, 0.5% or more, or 0.6% or more. The content of Al may also be 1.4% or more, 1.3% or more, or 1.2% or more.

(Fe: 3 to 20%)

Fe may be contained in the plating layer by diffusion from the steel sheet if heat treating and alloying the plated steel sheet after forming a plating layer containing Zn on the steel sheet. The content of Fe is preferably 3% or more. The content of Fe may also be 4% or more or 5% or more. Further, the content of Fe is preferably 20% or less. The content of Fe may also be 15% or less, 12% or less, 10% or less, or 8% or less.

In one example of the chemical composition of a plating suitable for the hot dip galvannealed steel sheet of the present embodiment, for example the balance besides the above constituents is comprised of Zn and impurities. The "impurities" in the plating layer mean constituents entering due to various factors in the production process such as the starting materials when producing the plating layer and not constituents intentionally added to the plating layer. For example, when elements other than the Zn, Fe, and Al contained in the steel sheet diffuse and are contained in the plating layer, they correspond to impurities. In one example of the chemical composition of the plating suitable for the plated steel sheet of the present embodiment, as impurities, elements other than the basic constituents and optional constituents explained above may also be contained in trace amounts in a range not obstructing the effects of the present embodiment.

The chemical composition of the plating layer can be determined by dissolving the plating layer in an acid solution to which an inhibitor for inhibiting corrosion of the steel sheet has been added and measuring the obtained solution by ICP (inductively coupled plasma) spectrometry.

[Thickness of Plating Layer]

The thickness of the plating layer may for example be 3 to 50 $\mu$m. Further, the amount of deposition of the plating layer is not particularly limited, but for example may be 10 to 170 g/m$^2$ per surface. In the present invention, the amount of deposition of the plating layer is determined by dissolving the plating layer in an acid solution to which an inhibitor for suppressing corrosion of the material steel sheet has been added and finding the change in weight before and after the plating layer is pickled and peeled off. As the acid solution to which the inhibitor has been added, for example, a 10% hydrochloric acid solution to which 0.06 mass% of an inhibitor (ibit 710K made by Asahi Chemical) has been added may be used. After removing the plating layer, the base steel sheet is rinsed and dried.

The thickness of the plating layer may be 5 $\mu$m or more, 7 $\mu$m or more, or 10 $\mu$m or more. The thickness of the plating layer may also be 45 $\mu$m or less, 40 $\mu$m or less, 35 $\mu$m or less, 30 $\mu$m or less. The amount of deposition of the plating layer may be 15 g/m$^2$ or more, 20 g/m$^2$ or more, 25 g/m$^2$ or more, or 30 g/m$^2$ or more per surface. The amount of deposition of the plating layer may also be 160 g/m$^2$ or less, 140 g/m$^2$ or less, 120 g/m$^2$ or less, or 100 g/m$^2$ or less per surface.

Note that the steel sheet of the present invention exhibits the effect of improvement of the LME resistance even if a steel sheet not provided with hot dip galvannealing. If welding together steel sheets which are not galvanized, LME cracking will never occur. However, even when welding on the one hand a steel sheet which has been galvanized and on the other hand a steel sheet which has not been galvanized, molten zinc plating will form at the overlaid surfaces of the steel sheets at the time of welding. For this reason, there is a possibility of the molten zinc plating contacting the surface of the steel sheet which has not been plated and LME cracking occurring. Further, when using welding electrodes which have spot welded a steel sheet provided with galvanization so as to weld a steel sheet which has not been plated, there is a possibility of the zinc plating deposited on the welding electrodes melting and contacting the steel sheet surface and LME cracking occurring. If using the steel sheet of the present invention as the steel sheet which has not been plated, even in such a case, the B concentrated at the surface layer can inhibit penetration of the molten zinc into the Fe grain boundaries, therefore LME cracking can be suppressed.

[Sheet Thickness]

The sheet thickness of the steel sheet and hot dip galvannealed steel sheet of the present embodiment is not particularly limited. For example, it may be 0.6 to 3.2 mm. The sheet thickness may also be 0.8 mm or more or 1.0 mm or more. The sheet thickness may also be 3.0 mm or less, 2.8 mm or less, 2.6 mm or less, 2.4 mm or less, 2.2 mm or less, or 2.0 mm or less.

<<Method of Production of Plated Steel Sheet>>

Next, the method of production of the steel sheet of the present embodiment will be explained.

The steel sheet according to the present embodiment can be obtained by a method of production comprising a casting step of casting molten steel adjusted in chemical composition to form a steel slab, a hot rolling step of hot rolling the steel slab to obtain a hot rolled steel sheet, a coiling step of coiling up the hot rolled steel sheet, a pickling step of pickling the coiled hot rolled steel sheet, a cold rolling step of cold rolling the pickled hot rolled steel sheet to obtain a cold rolled steel sheet, and an annealing step of annealing the cold rolled steel sheet. Alternatively, after the hot rolling step, the hot rolled steel sheet need not be coiled, but may be pickled then cold rolled as it is.

[Casting Step]

The conditions of the casting step are not particularly limited. For example, after smelting by a blast furnace, electric furnace, etc., various types of secondary refining may be performed, then the usual continuous casting, casting by ingot method, or other method may be used for casting.

[Hot Rolling Step]

The steel slab obtained by casting can be hot rolled to obtain a hot rolled steel sheet. The hot rolling step is performed by hot rolling the cast steel slab directly or after cooling once, then reheating it. If reheating, the heating temperature of the steel slab may, for example, be 1100 to 1250°C. In the hot rolling step, usually rough rolling and finish rolling are performed. The temperature and reduction rate of each rolling may be suitably changed in accordance with the desired microstructure or sheet thickness. For example, the end temperature of the finish rolling may be 900 to 1050°C and the reduction rate of the finish rolling may be 10 to 50%.

[Coiling Step]

The hot rolled steel sheet can be coiled at a predetermined temperature. The coiling temperature may be suitably changed in accordance with the desired microstructure etc. For example, it may be 500 to 800°C. Before coiling or after coiling, then uncoiling, the hot rolled steel sheet may be subjected to predetermined heat treatment. Alternatively, the coiling step need not be performed and the hot rolled steel sheet can be pickled after the hot rolling step and the later explained cold rolling performed.

[Pickling Step]

After hot rolling, the steel sheet is pickled. In the method of production of the steel sheet of the present embodiment, to make B concentrate at the surface layer of the steel sheet in the later annealing step, the roughness of the steel sheet surface after pickling is controlled. Specifically, the roughness is made an arithmetic average height Ra defined by JIS B0601: 2013 of 1.5 $\mu$m or more. This condition means there is a certain degree of roughness present at the steel sheet surface. If the roughness is small, the strain which is imparted to the surface layer of the steel sheet becomes smaller, therefore concentration of B at the surface layer of the steel sheet no longer proceeds even due to the later mentioned annealing at a high dew point.

The greater the roughness Ra, the more preferable. 2.0 $\mu$m or more is preferable, while 2.5 $\mu$m or more, 3.0 $\mu$m or more, or 3.5 $\mu$m or more is more preferable.

The roughness of the steel sheet surface after pickling is determined based on JIS B 0601: 2013 by randomly selecting 10 locations at the surface at the surface layer part side and measuring the surface profile at the respective locations by a contact type surface roughness meter. The surface roughnesses at the respective locations are arithmetically averaged to find the "arithmetic average roughness Ra". The roughness of the steel sheet surface after pickling does not have to be constantly measured. Measurement of the roughness may be omitted after the pickling conditions at which the desired roughness are formed are determined.

The roughness of the surface of a steel sheet changes depending on the pickling conditions, therefore it is sufficient to suitably adjust the conditions so that the above roughness is obtained. For example, a 20 to 95°C temperature 1 to 10 mass% hydrochloric acid solution may be used for pickling for a 30 to less than 200 second pickling time.

By the steel sheet surface after pickling being provided with such roughness and by rolling this roughness in the later cold rolling step so as to impart strain to the surface layer of the steel, concentration of B at the surface layer of the steel sheet in the later annealing step is promoted.

[Cold Rolling Step]

After pickling the hot rolled steel sheet, the hot rolled steel sheet can be cold rolled to obtain a cold rolled steel sheet. In the cold rolling step, the roughness imparted in the above pickling step is crushed by rolling to thereby impart strain to the surface layer of the steel sheet. For this reason, the rolls used for the cold rolling are preferably ones having small roughness of the surface. The surface roughness of the rolls is preferably an Ra of 1.0 μm or less. The surface roughness of the rolls may also be an Ra of 0.8 μm or less, 0.6 μm or less, or 0.5 μm or less. The reduction rate of the cold rolling may be suitably changed in accordance with the desired microstructure or sheet thickness. For example, it may be 20 to 80%. After the cold rolling step, for example, the steel sheet may be air cooled down to room temperature for cooling.

By the roughness of the surface of the hot rolled steel sheet being cold rolled, strain is imparted to the surface layer of the steel sheet. Due to this, concentration of B at the surface layer of the steel sheet is promoted in the subsequent annealing step.

[Annealing Step]

After the cold rolling step, the obtained cold rolled steel sheet is treated by the following high dew point annealing. In the method of production of the steel sheet and hot dip galvannealed steel sheet of the present embodiment, in the annealing step, oxidation proceeds toward the inside of the steel sheet as internal oxidation at the surface layer of the steel sheet without external oxidation being made to proceed at the surface of the steel sheet.

In the annealing step of the present embodiment, the steel sheet to which strain has been imparted at the surface layer by the above-mentioned steps is held at a high dew point. In particular, in the annealing step in the method of production of the steel sheet and hot dip galvannealed steel sheet of the present embodiment, the dew point is changed between the first half and second half of the rise of temperature up to the holding temperature. Specifically, the dew point in the range from room temperature up to the control temperature and the dew point in the range from the control temperature to the holding temperature are made different. Here, the "control temperature" means the temperature for changing the dew point. The rate of temperature rise up to the holding temperature is not particularly limited. The rate of temperature rise may for example be 1 to 10°C/s. If the rate of temperature rise is less than 1°C/s, it takes too much time for raising the temperature to the control temperature and the oxides on the surface of the plating layer are liable to become thicker. On the other hand, if the rate of temperature rise is more than 10°C/s, internal oxidation will not sufficiently proceed, the strain imparted to the steel sheet surface layer will not be sufficiently released, and the B concentration is liable to become insufficient. From these viewpoints, the rate of temperature rise may be 2°C/s or more, 3°C/s or more, or 4°C/s or more. The rate of temperature rise may also be 9°C/s or less, 8°C/s or less, or 7°C/s or less.

The control temperature is 450 to 550°C. In the range of temperature rise from room temperature to the control temperature, the dew point in the annealing atmosphere is -40°C or more and -20°C or less. In the range from the control temperature to the holding temperature, the dew point of the annealing atmosphere is made more than -20°C and 20°C or less.

If the control temperature is less than 450°C, the dew point rises at a low temperature, therefore internal oxidation proceeds at a low temperature, strain imparted to the steel sheet surface layer is released, and concentration of B is no longer promoted in the range from the control temperature to the holding temperature. If the control temperature is more than 550°C, the strain imparted to the steel sheet surface layer is released before internal oxidation proceeds at a high temperature and the concentration of B is no longer promoted.

If the dew point in the range from room temperature to the control temperature is less than - 40°C, Si and Mn will externally oxidize and internal oxidation is liable to no longer proceed in the range from the control temperature to the holding temperature. If the dew point in the range from room temperature to the control temperature is more than -20°C, internal oxidation will proceed at a low temperature, the strain imparted to the surface layer of the steel sheet will be released, and, as a result, concentration of B is liable to no longer be promoted in the range from the control temperature to the holding temperature.

Similarly, if the dew point in the range from the control temperature to the holding temperature is -20°C or less, the internal oxidation for suppressing the deboronation phenomenon is liable to be unable to proceed sufficiently. If the dew point in the range from the control temperature to the holding temperature is more than 20°C, external oxidation will proceed and the internal oxidation for suppressing the deboronation phenomenon is liable to be unable to proceed sufficiently.

Furthermore, the dew point in the range from the control temperature to the holding temperature is made 10°C or more higher than the dew point in the range when raising the temperature from room temperature to the control temperature. Due to this, it is possible to promote internal oxidation and promote the concentration of B.

From the viewpoint of suitably concentrating B, the control temperature may be 460°C or more, 470°C or more, or 480°C or more. The control temperature may also be 540°C or less, 530°C or less, or 520°C or less. From the viewpoint of suitably causing internal oxidation and concentrating B, the dew point in the range when raising the temperature from room temperature to the control temperature may be -38°C or more, -37°C or more, -35°C or more. The dew point in the range when raising the temperature from room temperature to the control temperature may be 18°C or less, 17°C or less, or 15°C or less. The dew point in the range from the control temperature to the holding temperature may also be -18°C or more, -17°C or more, -15°C or more. The dew point in the range from the control temperature to the holding temperature may also be 18°C or less, 17°C or less, 15°C or less.

The holding temperature is made 760 to 900°C in order for the internal oxidation to proceed and concentration of B to be promoted. Further, the holding time at the holding temperature is made 0 to 360 seconds. The holding temperature may also be 770°C or more, 780°C or more, or 790°C or more. The holding temperature may also be 890°C or less, 880°C or less, or 870°C or less. The holding time may also be 10 seconds or more, 30 seconds or more, 50 seconds or more, or 60 seconds or more. The holding time may also be 330 seconds or less, 300 seconds or less, 270 seconds or less, 240 seconds or less, or 200 seconds or less.

The atmosphere in the annealing is preferably a nonoxidizing atmosphere. For example, it may be $N_2$ -1 to 10vol%$H_2$, $N_2$ -2 to 4vol%$H_2$. The oxygen concentration of the atmosphere is preferably 50 ppm or less and may also be 30 ppm or less, 20 ppm or less, or 10 ppm or less. By setting such conditions, it is possible to suppress oxidation of the plating surface while making internal oxidation proceed.

By making the dew point rise at the control temperature or more in the annealing step in the state where strain is imparted to the surface layer of the steel sheet by the above-mentioned method, internal oxidation rapidly proceeds at the surface layer of the steel sheet and B is taken into the oxides formed inside of the steel sheet whereby B concentrates at the surface layer of the steel sheet, B segregates at the Fe grain boundaries, and the above-mentioned distribution of concentration of B at the surface layer is obtained.

The annealing is performed in the state where a 1 to 20 MPa tension is applied. If tension is applied at the time of annealing, strain is introduced into the steel sheet more greatly and the B concentration at the surface layer is promoted.

<<Method of Production of Hot Dip Galvannealed Steel Sheet>>

Using the steel sheet according to the present invention produced as explained above, a hot dip galvannealed steel sheet can be produced by a method of production including a plating step and an alloying step.

[Plating Step]

The plating may be performed in accordance with a method known to persons skilled in the art. The plating, for example, may be performed by hot dip coating or may be performed by electroplating, vapor deposition plating, flame spraying, and cold spraying. Preferably the plating is performed by hot dip coating.

[Alloying Step]

After the plating step, known alloying treatment is performed to alloy the plating.

The conditions of the plating step and alloying step may be suitably set considering the chemical composition, thickness, amount of deposition, etc. of the desired plating layer.

The steel sheet and hot dip galvannealed steel sheet according to the present embodiment are high strength and have a high LME resistance and hydrogen desorption property, therefore can be suitably used in a broad range of fields such as automobiles, household electrical appliance products, and building materials. In particular, use in the automobile field is preferable. A plated steel sheet used in automobiles is often spot welded. In that case, LME cracking can become a remarkable problem. For this reason, if using the steel sheet and hot dip galvannealed steel sheet according to the present embodiment as the steel sheet for automobiles, the effect of the present embodiment of having a high LME resistance is suitably manifested.

Further, the steel sheet and hot dip galvannealed steel sheet according to the present embodiment are also excellent in hydrogen desorption property due to the formation of concentrated B at the surface layer, therefore are also suitable for the automobile field on this point as well.

EXAMPLES

Below, examples will be used to explain the present invention in more detail. The present invention is not limited to these examples.

<Example No. 1>

Molten steel was smelted in a blast furnace and cast by continuous casting to obtain a steel slab having a chemical composition described in No. 1 of Table 1. The obtained steel slab was heated to 1200°C and hot rolled by an end temperature of finish rolling of 950°C and reduction rate of finish rolling of 30% to obtain a hot rolled steel sheet. The obtained hot rolled steel sheet was coiled up by a coiling temperature of 650°C.

After coiling, the steel sheet was pickled for 40 seconds using a 40°C 5 mass% hydrochloric acid solution. After pickling, it was cold rolled by a reduction rate of 50% to obtain a cold rolled steel sheet. The thickness of the cold rolled steel sheet was 1.6 mm.

After that, the steel sheet was annealed by a holding temperature of 800°C and holding time of 0 second in an oxygen concentration 20 ppm or less furnace in a $N_2$ -4vol%$H_2$ gas atmosphere to prepare a steel sheet sample. The rate of temperature rise at the time of annealing was 5.0°C/s. The dew point of the annealing atmosphere was -20°C from room temperature to the control temperature, the control temperature being 500°C, and -10°C from the control temperature to the holding temperature. Further, the annealing was performed while applying 15 MPa tension. Note that, a holding time of 0 second means immediately starting to lower the temperature after raising the temperature to 800°C.

<Example Nos. 2 to 22 and Comparative Example Nos. 23 to 33>

Except for making the chemical composition the ones described in Table 1 and making the annealing conditions the ones described in Table 2, a steel sheet was prepared under conditions similar to Example 1. Note that in examples with "yes" for any hot dip galvannealed layer of Table 2, the annealed steel sheet was dipped in a 450°C hot dip galvanization bath (Zn-0.2%Al) for 3 seconds, then was pulled out by a 100 mm/s, was controlled in amount of plating deposition to 50 g/m$^2$ by $N_2$ wiping gas, then was alloyed at 520°C for 30 seconds to obtain a hot dip galvannealed steel sheet provided with a hot dip galvannealed layer at both surfaces. In No. 33, after the hot dip galvannealing, the steel sheet was heat treated in an atmospheric furnace at 800°C for 10 seconds.

(Roughness After Pickling)

When producing steel sheet and hot dip galvannealed steel sheet, the hot rolled steel sheet after pickling was measured for roughness of the surface. The roughness of the surface was measured based on JIS B 0601: 2013 by randomly selecting 10 locations at the surface of the surface layer part side, measuring the surface profile at each of the locations by a contact type surface roughness meter, and arithmetically averaging the surface roughnesses at these locations to find the "arithmetic average roughness Ra". The roughness of the surface of the hot rolled steel sheet are shown in Table 2.

[Table 1]

Table 1

| No. | Class | Chemical composition (mass%), balance: Fe and impurities | | | | | | | | | | |
|---|---|---|---|---|---|---|---|---|---|---|---|---|
| | | C | Si | Mn | sol. Al | P | s | N | B | Ti | Nb | Others |
| 1 | Inv. Ex. | 0.05 | 0.7 | 2.0 | 0.0 | 0.0001 | 0.0006 | 0.0003 | 0.0020 | 0.0021 | 0.0210 | |
| 2 | Inv. Ex. | 0.10 | 0.7 | 2.0 | 0.0 | 0.0080 | 0.0005 | 0.0003 | 0.0010 | 0.0021 | 0.0002 | Hf: 0.01 |
| 3 | Inv. Ex. | 0.10 | 1.0 | 2.0 | 0.0 | 0.0080 | 0.0007 | 0.0002 | 0.0010 | 0.0010 | 0.0007 | |
| 4 | Inv. Ex. | 0.10 | 1.0 | 2.5 | 1.0 | 0.0070 | 0.0003 | 0.0007 | 0.0018 | 0.0010 | 0.0001 | |
| 5 | Inv. Ex. | 0.10 | 1.0 | 2.5 | 0.5 | 0.0020 | 0.0007 | 0.0002 | 0.0010 | 0.0092 | 0.0009 | |
| 6 | Inv. Ex. | 0.20 | 1.0 | 2.0 | 0.5 | 0.0100 | 0.0004 | 0.0001 | 0.0005 | 0.0270 | 0.0003 | Mg: 0.001 |
| 7 | Inv. Ex. | 0.20 | 1.0 | 2.0 | 0.7 | 0.0020 | 0.0001 | 0.0009 | 0.0010 | 0.0069 | 0.0007 | Zr: 0.015 |
| 8 | Inv. Ex. | 0.20 | 1.0 | 2.2 | 0.8 | 0.0008 | 0.0004 | 0.0006 | 0.0023 | 0.0077 | 0.0008 | |
| 9 | Inv. Ex. | 0.20 | 1.0 | 2.5 | 0.7 | 0.0017 | 0.0006 | 0.0003 | 0.0020 | 0.0059 | 0.0000 | Cr: 0.10 |
| 10 | Inv. Ex. | 0.20 | 1.0 | 2.3 | 1.0 | 0.0011 | 0.0009 | 0.0004 | 0.0010 | 0.0077 | 0.0008 | Cu: 0.10 |

(continued)

| No. | Class | Chemical composition (mass%), balance: Fe and impurities | | | | | | | | | | |
|---|---|---|---|---|---|---|---|---|---|---|---|---|
| | | C | Si | Mn | sol. Al | P | s | N | B | Ti | Nb | Others |
| 11 | Inv. Ex. | 0.20 | 1.0 | 2.3 | 0.1 | 0.0031 | 0.0007 | 0.0005 | 0.0009 | 0.0073 | 0.0007 | |
| 12 | Inv. Ex. | 0.20 | 1.0 | 2.5 | 1.0 | 0.0065 | 0.0010 | 0.0002 | 0.0010 | 0.0073 | 0.0007 | Ni: 0.08 |
| 13 | Inv. Ex. | 0.25 | 1.0 | 2.5 | 0.0 | 0.0012 | 0.0002 | 0.0002 | 0.0023 | 0.0089 | 0.0000 | |
| 14 | Inv. Ex. | 0.25 | 1.0 | 2.5 | 0.5 | 0.0040 | 0.0005 | 0.0003 | 0.0010 | 0.0470 | 0.0005 | V: 0.09 |
| 15 | Inv. Ex. | 0.30 | 1.0 | 5.0 | 0.5 | 0.0099 | 0.0002 | 0.0005 | 0.0020 | 0.0070 | 0.0007 | |
| 16 | Inv. Ex. | 0.30 | 3.0 | 0.3 | 0.5 | 0.0110 | 0.0007 | 0.0009 | 0.0023 | 0.0160 | 0.0000 | |
| 17 | Inv. Ex. | 0.35 | 1.0 | 3.0 | 1.5 | 0.0092 | 0.0003 | 0.0007 | 0.0020 | 0.0180 | 0.0002 | Mo: 0.09 |
| 18 | Inv. Ex. | 0.35 | 1.0 | 2.5 | 1.0 | 0.0091 | 0.0002 | 0.0005 | 0.0010 | 0.0260 | 0.0010 | REM: 0.008 |
| 19 | Inv. Ex. | 0.40 | 0.7 | 2.5 | 1.9 | 0.0045 | 0.0004 | 0.0007 | 0.0020 | 0.0023 | 0.0002 | |
| 20 | Inv. Ex. | 0.40 | 1.0 | 2.5 | 1.0 | 0.0035 | 0.0004 | 0.0005 | 0.0018 | 0.0013 | 0.0001 | W: 0.05 |
| 21 | Inv. Ex. | 0.40 | 1.0 | 2.2 | 1.0 | 0.0082 | 0.0005 | 0.0008 | 0.0018 | 0.0032 | 0.0003 | |
| 22 | Inv. Ex. | 0.40 | 1.0 | 2.2 | 1.0 | 0.0080 | 0.0005 | 0.0002 | 0.0020 | 0.0054 | 0.0005 | Ca: 0.0100 |
| 23 | Comp. Ex. | 0.20 | 0.5 | 2.0 | 1.0 | 0.0100 | 0.0008 | 0.0007 | 0.0018 | 0.0037 | 0.0000 | |
| 24 | Comp. Ex. | 0.20 | 3.1 | 2.0 | 1.0 | 0.0100 | 0.0007 | 0.0004 | 0.0019 | 0.0073 | 0.0000 | |
| 25 | Comp. Ex. | 0.20 | 1.0 | 2.0 | 1.0 | 0.0100 | 0.0005 | 0.0003 | 0.0018 | 0.0087 | 0.0000 | |
| 26 | Comp. Ex. | 0.20 | 1.0 | 2.0 | 1.0 | 0.0100 | 0.0008 | 0.0004 | 0.0018 | 0.0017 | 0.0000 | |
| 27 | Comp. Ex. | 0.20 | 1.0 | 2.0 | 1.0 | 0.0100 | 0.0005 | 0.0003 | 0.0016 | 0.0087 | 0.0000 | |
| 28 | Comp. Ex. | 0.20 | 1.0 | 2.0 | 1.0 | 0.0100 | 0.0008 | 0.0004 | 0.0019 | 0.0017 | 0.0000 | |
| 29 | Comp. Ex. | 0.20 | 1.0 | 2.0 | 1.0 | 0.0100 | 0.0008 | 0.0004 | 0.0016 | 0.0017 | 0.0000 | |
| 30 | Comp. Ex. | 0.20 | 1.0 | 2.0 | 1.0 | 0.0100 | 0.0008 | 0.0004 | 0.0018 | 0.0170 | 0.0000 | |
| 31 | Comp. Ex. | 0.20 | 1.0 | 2.0 | 1.0 | 0.0100 | 0.0007 | 0.0003 | 0.0008 | 0.0023 | 0.0000 | |
| 32 | Comp. Ex. | 0.20 | 1.0 | 2.0 | 1.0 | 0.0100 | 0.0010 | 0.0001 | 0.0019 | 0.0081 | 0.0000 | |
| 33 | Comp. Ex. | 0.20 | 1.0 | 2.0 | 0.0 | 0.0098 | 0.0008 | 0.0003 | 0.0005 | 0.0017 | 0.0003 | |

*Underlines indicate outside scope of present invention.

[Table 2]

Table 2

| No. | Class | Roughness after pickling Ra (μm) | Annealing conditions | | | | | Any hot dip galvannealed layer | Heating in atmospheric furnace after plating |
| | | | Control temp. (°C) | Dew point of room temp. to control temp. (°C) | Dew point of control temp. to holding temp. (°C) | Holding temp. (°C) | Holding time (s) | | |
|---|---|---|---|---|---|---|---|---|---|
| 1 | Inv. Ex. | 1.5 | 500 | -20 | -10 | 800 | 0 | No | No |
| 2 | Inv. Ex. | 2.5 | 500 | -40 | -19 | 800 | 30 | Yes | No |
| 3 | Inv. Ex. | 1.5 | 450 | -20 | -10 | 800 | 20 | Yes | No |
| 4 | Inv. Ex. | 1.5 | 500 | -20 | 0 | 820 | 30 | Yes | No |
| 5 | Inv. Ex. | 2.5 | 500 | -20 | 0 | 840 | 30 | Yes | No |
| 6 | Inv. Ex. | 1.7 | 550 | -20 | 0 | 860 | 40 | Yes | No |
| 7 | Inv. Ex. | 2.6 | 500 | -20 | 0 | 860 | 100 | Yes | No |
| 8 | Inv. Ex. | 2.6 | 500 | -20 | 0 | 860 | 100 | Yes | No |
| 9 | Inv. Ex. | 2.9 | 500 | -20 | 0 | 860 | 100 | Yes | No |
| 10 | Inv. Ex. | 3.5 | 500 | -20 | 0 | 860 | 100 | Yes | No |
| 11 | Inv. Ex. | 3.2 | 500 | -20 | 0 | 860 | 100 | Yes | No |
| 12 | Inv. Ex. | 2.5 | 500 | -20 | 0 | 860 | 100 | Yes | No |
| 13 | Inv. Ex. | 2.4 | 500 | -20 | 0 | 860 | 100 | Yes | No |
| 14 | Inv. Ex. | 3.5 | 500 | -20 | 0 | 860 | 100 | No | No |
| 15 | Inv. Ex. | 3.2 | 500 | -20 | 0 | 860 | 100 | Yes | No |
| 16 | Inv. Ex. | 3.0 | 500 | -20 | 0 | 860 | 100 | Yes | No |
| 17 | Inv. Ex. | 3.8 | 500 | -20 | 0 | 860 | 360 | Yes | No |
| 18 | Inv. Ex. | 2.9 | 500 | -20 | 0 | 860 | 100 | Yes | No |
| 19 | Inv. Ex. | 2.6 | 500 | -20 | 0 | 860 | 100 | Yes | No |
| 20 | Inv. Ex. | 2.5 | 500 | -20 | 0 | 900 | 100 | No | No |
| 21 | Inv. Ex. | 3.1 | 500 | -20 | 0 | 860 | 100 | Yes | No |
| 22 | Inv. Ex. | 2.7 | 500 | -20 | 0 | 860 | 100 | Yes | No |
| 23 | Comp. Ex. | 1.5 | 500 | -30 | -10 | 800 | 30 | No | No |
| 24 | Comp. Ex. | 1.5 | 500 | -30 | -10 | 800 | 30 | No | No |
| 25 | Comp. Ex. | 1.5 | 500 | -60 | -10 | 800 | 30 | No | No |
| 26 | Comp. Ex. | 1.5 | 500 | 0 | 0 | 800 | 30 | No | No |
| 27 | Comp. Ex. | 1.5 | 500 | -30 | -27 | 800 | 30 | No | No |
| 28 | Comp. Ex. | 1.5 | 500 | -30 | 23 | 800 | 30 | No | No |

(continued)

| No. | Class | Roughness after pickling Ra (μm) | Annealing conditions | | | | | Any hot dip galvannealed layer | Heating in atmospheric furnace after plating |
|---|---|---|---|---|---|---|---|---|---|
| | | | Control temp. (°C) | Dew point of room temp. to control temp. (°C) | Dew point of control temp. to holding temp. (°C) | Holding temp. (°C) | Holding time (s) | | |
| 29 | Comp. Ex. | 1.5 | <u>420</u> | -30 | -10 | 800 | 30 | No | No |
| 30 | Comp. Ex. | 1.5 | <u>570</u> | -30 | -10 | 800 | 30 | No | No |
| 31 | Comp. Ex. | 1.5 | 500 | -30 | -10 | <u>720</u> | 30 | No | No |
| 32 | Comp. Ex. | <u>1.2</u> | 500 | -30 | -10 | 800 | 30 | No | No |
| 33 | Comp. Ex. | 1.5 | 500 | -30 | -10 | 800 | 30 | No | <u>800°C×10s</u> |

*Underlines indicate outside scope of production conditions of present invention.

(B Distribution at Steel Surface Layer)

The B distribution at the steel surface layer of the steel sheet was evaluated as follows:

A sample cut to 50 mm×50 mm size from each steel sheet and hot dip galvannealed steel sheet was used for GDS. The GDS was measured five times in the sheet thickness direction. The average value of these was made the B concentration. The measurement conditions were as follows: The B concentrations corresponding to the x (μm) depth and 150 μm depth are designated as Bx and B150.

Apparatus: high frequency glow discharge optical emission spectrometry apparatus (made by LECO Japan Corporation, Model Name "GDS850A"

Ar gas pressure: 0.3 MPa
Anode diameter: 4 mmφ
RF output: 30W
Measurement time: 200 to 1500 seconds

From the Bx found, the depth satisfying the formula (1): $Bx/B150 \geq 5.0$ and the value of the left side of formula (2): $Bmax/B150$ were found.

(Thickness of Surface Oxide Layer)

Using examination of the cross-section by an SEM, a location containing 20% or more of O by EDS was defined as an oxide. The thickness of the oxides of the steel sheet surface or the hot dip galvannealed layer surface was measured. The measurement field was made a horizontal 80 μm×vertical 50 μm. The greatest thickness of the oxides in the field was measured. Similar measurement was performed at five fields. The average of the maximum oxide thicknesses of the different fields was deemed the surface oxide layer thickness. These are shown in Table 3. The "<0.5" in Table 3 shows the oxide thickness was less than 0.5 μm.

(Thickness of Internal Oxidation Layer)

Using examination of the cross-section by an SEM, precipitates containing 20% or more O by EDS in the surface layer of the steel sheet or the surface layer of the steel sheet right under the hot dip galvannealed layer were defined as internal oxides. The thickness of the oxide layer was measured. The size of the measurement field was made a horizontal

80 μm×vertical 50 μm. The greatest thickness of the internal oxidation layer in the field was measured. Similar measurement was performed at five fields. The average of the maximum internal oxidation layer thicknesses of the different fields was deemed the internal oxidation layer thickness. These are shown in Table 3.

(Tensile Strength)

For each steel sheet and hot dip galvannealed steel sheet, a JIS No. 5 tensile test piece having a direction perpendicular to the rolling direction as a longitudinal direction was taken and subjected to a tensile test based on JIS Z 2241: 2011 to find the tensile strength. This was evaluated in the following way: In the present embodiment, if evaluated as A or more, the sample was judged excellent in LME resistance.

Evaluation AAA: 1180 MPa or more
Evaluation AA: 980 MPa or more and less than 1180 MPa
Evaluation A: 780 MPa or more and less than 980 MPa
Evaluation B: less than 780 MPa

(LME Resistance)

Two samples cut to 50 mm×100 mm size were cut from each steel sheet and hot dip galvannealed steel sheet. These two samples were spot welded using dome radius type 8 mm welding electrodes by a weld angle of 5°, a squeezing force of 5.0 kN, a weld time of 1.2 seconds, and a weld current of 12 kA to produce a welded joint.
Referring to FIG. 2, the method of evaluation of the LME resistance will be explained. The LME resistance was evaluated by overlaying two steel sheets 1 and spot welding them, then determining the length of an LME crack (cracking of shoulder part 11) formed at the shoulder part of the welded part 2 formed. The "shoulder part" means the slanted part of the depressed recess formed by spot welding. The length of the cracking of shoulder part 11 was used for evaluation as shown below. In the examples, if evaluated as A or more, the sample was judged excellent in LME resistance.

Evaluation AAA: 0 μm
Evaluation AA: more than 0 μm and less than 50 μm
Evaluation A: 50 μm or more and less than 160 μm
Evaluation B: 160 μm or more

(Hydrogen Desorption Test)

From each steel sheet and hot dip galvannealed steel sheet, a test piece cut to 80 mm×50 mm size was taken and was electrochemically charged with hydrogen. The test piece was run through with current in a 3% NaCl+3g/L NH$_4$ SCN aqueous solution (cathode current density 1mA/cm$^2$ ) for 48 hours. After charging of hydrogen, the steel sheet and hot dip galvannealed steel sheet were allowed to stand at room temperature in an air atmosphere for 48 hours. After the elapse of a predetermined time, the temperature programmed desorption method was used to measure the diffusible amounts of hydrogen which had been contained in the steel sheet and hot dip galvannealed steel sheet and the amounts evaluated by the following way. Note that, in the thermal desorption method, the temperature was raised by a rate of temperature elevation of 100°C/h until 400°C and the total sum of the amounts of hydrogen discharged from room temperature to 200°C was made the diffusible amount of hydrogen.

Evaluation AAA: 5% or less of initial amount of hydrogen
Evaluation AA: 15% or less of initial amount of hydrogen
Evaluation A: less than 40% of initial amount of hydrogen
Evaluation B: 40% or more of initial amount of hydrogen

The results of evaluation are shown in Table 3.

[Table 3]

Table 3

| No. | Class | Steel surface layer B distribution | | Surface oxide thickness (μm) | Internal oxidation layer thickness (μm) | Performance | | |
|---|---|---|---|---|---|---|---|---|
| | | Depth satisfying formula (1) (μm) | Left side of formula (2) | | | Tensile strength | LME resistance | Hydrogen desorption property |
| 1 | Inv. Ex. | 0.5 | 3 | <0.5 | 1.0 | A | A | A |
| 2 | Inv. Ex. | 1.6 | 2 | <0.5 | 2.2 | AA | AA | A |
| 3 | Inv. Ex. | 1.2 | 4 | <0.5 | 2.0 | A | A | A |
| 4 | Inv. Ex. | 1.5 | 5 | <0.5 | 2.5 | AA | AA | A |
| 5 | Inv. Ex. | 1.8 | 6 | <0.5 | 3.3 | AA | AAA | A |
| 6 | Inv. Ex. | 1.9 | 8 | <0.5 | 4.3 | AA | AAA | AA |
| 7 | Inv. Ex. | 2.2 | 10 | <0.5 | 5.5 | AA | AAA | AA |
| 8 | Inv. Ex. | 2.3 | 12 | <0.5 | 6.3 | AA | AAA | AA |
| 9 | Inv. Ex. | 2.4 | 12 | <0.5 | 6.3 | AA | AAA | AA |
| 10 | Inv. Ex. | 2.6 | 11 | <0.5 | 6.1 | AA | AAA | AA |
| 11 | Inv. Ex. | 3.5 | 12 | <0.5 | 6.2 | AA | AAA | AA |
| 12 | Inv. Ex. | 2.4 | 12 | <0.5 | 5.9 | AA | AAA | AA |
| 13 | Inv. Ex. | 2.2 | 11 | <0.5 | 6.0 | AAA | AAA | AA |
| 14 | Inv. Ex. | 3.1 | 11 | <0.5 | 6.0 | AAA | AAA | AA |
| 15 | Inv. Ex. | 3.0 | 12 | <0.5 | 6.2 | AAA | AAA | AA |
| 16 | Inv. Ex. | 3.0 | 11 | <0.5 | 6.5 | AA | AAA | AA |
| 17 | Inv. Ex. | 6.3 | 20 | <0.5 | 19.2 | AAA | AAA | AA |
| 18 | Inv. Ex. | 2.5 | 15 | <0.5 | 6.7 | AAA | AAA | AA |
| 19 | Inv. Ex. | 2.3 | 12 | <0.5 | 6.7 | AAA | AAA | AA |
| 20 | Inv. Ex. | 3.4 | 18 | <0.5 | 8.8 | AAA | AAA | AA |
| 21 | Inv. Ex. | 3.2 | 12 | <0.5 | 7.3 | AAA | AAA | AA |
| 22 | Inv. Ex. | 2.8 | 15 | <0.5 | 6.5 | AAA | AAA | AA |
| 23 | Comp. Ex. | <u>0.0</u> | 0 | <0.5 | <u>0.8</u> | AA | <u>B</u> | <u>B</u> |
| 24 | Comp. Ex. | 0.7 | 2 | <0.5 | 1.1 | AA | <u>B</u> | <u>B</u> |
| 25 | Comp. Ex. | <u>0.0</u> | 0 | <0.5 | <u>0.0</u> | AA | <u>B</u> | <u>B</u> |
| 26 | Comp. Ex. | <u>0.2</u> | 1 | <0.5 | 2.1 | AA | <u>B</u> | <u>B</u> |
| 27 | Comp. Ex. | <u>0.3</u> | 1 | <0.5 | <u>0.6</u> | AA | <u>B</u> | <u>B</u> |
| 28 | Comp. Ex. | <u>0.2</u> | 1 | <0.5 | <u>0.1</u> | AA | <u>B</u> | <u>B</u> |
| 29 | Comp. Ex. | <u>0.3</u> | 1 | <0.5 | 2.0 | AA | <u>B</u> | <u>B</u> |
| 30 | Comp. Ex. | <u>0.3</u> | 1 | <0.5 | 2.3 | AA | <u>B</u> | <u>B</u> |
| 31 | Comp. Ex. | <u>0.1</u> | 1 | <0.5 | <u>0.7</u> | AA | <u>B</u> | <u>B</u> |
| 32 | Comp. Ex. | <u>0.4</u> | 2 | <0.5 | 1.1 | AA | <u>B</u> | A |
| 33 | Comp. Ex. | 1.2 | 2 | <u>1.0</u> | 1.8 | AA | A | <u>B</u> |

*Underlines indicate outside scope of present invention or desired properties not obtained.

Nos. 1 to 22 are invention examples. They could be confirmed to have excellent LME resistance and hydrogen desorption property.

In No. 23, the content of Si was low, internal oxidation could not be sufficiently caused in the annealing step, and the deboronation phenomenon could not be inhibited. Therefore, the internal oxidation layer became thin, B did not concentrate at the surface layer of the steel sheet, and Bx/B150 ≥ 5.0 was not satisfied. As a result, both the LME resistance and hydrogen desorption property were inferior.

In No. 24, the content of Si was high. Therefore, while B concentrated at the surface layer, the effect of lowering the LME resistance due to Si became great. As a result, both the LME resistance and hydrogen desorption property were inferior.

In No. 25, the dew point in the first half of temperature rise in the annealing step was low, Si and Mn externally oxidized, and internal oxidation could not occur in the second half of temperature rise. Therefore, the internal oxidation layer became thin, B did not concentrate at the surface layer of the steel sheet, and Bx/B150 ≥ 5.0 was not satisfied. As a result, the LME resistance and hydrogen desorption property were both inferior.

In No. 26, the dew point in the first half of temperature rise in the annealing step was high, internal oxidation proceeded at a low temperature, the strain imparted to the surface layer of the steel sheet was released, and concentration of B was not promoted in the second half of temperature rise. Therefore, B did not concentrate at the surface layer of the steel sheet, and Bx/B150 ≥ 5.0 was not satisfied. As a result, the LME resistance and hydrogen desorption property were both inferior.

In No. 27, the dew point in the second half of temperature rise in the annealing step was low and sufficient internal oxidation for suppressing the deboronation phenomenon did not occur. Therefore, the internal oxidation layer became thin, B did not concentrate at the surface layer of the steel sheet, and Bx/B150 ≥ 5.0 was not satisfied. As a result, the LME resistance and hydrogen desorption property were both inferior.

In No. 28, the dew point in the second half of temperature rise in the annealing step was high and external oxidation proceeded, therefore sufficient internal oxidation for suppressing the deboronation phenomenon did not occur. Therefore, the internal oxidation layer became thin, B did not concentrate at the surface layer of the steel sheet, and Bx/B150 ≥ 5.0 was not satisfied. As a result, the LME resistance and hydrogen desorption property were both inferior.

In No. 29, the control temperature in the annealing step was low, the dew point rose at a low temperature, therefore internal oxidation proceeded at a low temperature, the strain imparted to the surface layer of the steel sheet was released, and concentration of B was not promoted in the second half of temperature rise. Therefore, B did not concentrate at the surface layer of the steel sheet, and Bx/B150 ≥ 5.0 was not satisfied. As a result, the LME resistance and hydrogen desorption property were both inferior.

In No. 30, the control temperature in the annealing step was high, the strain imparted to the surface layer of the steel sheet was released before internal oxidation proceeded at a high temperature, and concentration of B was not promoted. Therefore, B did not concentrate at the surface layer of the steel sheet, and Bx/B150 ≥ 5.0 was not satisfied. As a result, the LME resistance and hydrogen desorption property were both inferior.

In No. 31, the holding temperature in the annealing step was low and internal oxidation did not proceed. Therefore, the internal oxidation layer became thin, B did not concentrate at the surface layer of the steel sheet, and Bx/B150 ≥ 5.0 was not satisfied. As a result, the LME resistance and hydrogen desorption property were both inferior.

In No. 32, after pickling, the roughness on the steel sheet surface was small. Therefore, sufficient strain was not given to the surface layer. Even by high dew point annealing, B did not concentrate at the surface layer of the steel sheet and Bx/B 150 ≥ 5.0 was not satisfied. As a result, while the steel sheet was excellent in the hydrogen desorption property, the LME resistance was inferior.

In No. 33, after forming the hot dip galvannealed layer, the steel sheet was heat treated in an atmospheric furnace at 800°C for 10 seconds. Therefore, thick oxides formed on the surface of the hot dip galvannealed layer and the hydrogen desorption property was inferior.

[INDUSTRIAL APPLICABILITY]

According to the present invention, it becomes possible to provide a steel sheet and hot dip galvannealed steel sheet having a high LME resistance and hydrogen desorption property. The steel sheet hot dip galvannealed steel sheet can be suitably used for automobiles, home electrical appliance products, building materials, and other applications, in particular for automobiles. Therefore, the present invention is an invention with extremely high applicability in industry.

REFERENCE SIGNS LIST

1 steel sheet
2 welded part

11 cracking of shoulder part

**Claims**

1. A steel sheet having a tensile strength of 780 MPa or more, wherein a chemical composition of the steel sheet comprises, by mass%,

   C: 0.05 to 0.40%,
   Si: 0.7 to 3.0%,
   Mn: 0.1 to 5.0%,
   sol. Al: 0 to 2.0%,
   P: 0.0300% or less,
   S: 0.0300% or less,
   N: 0.0100% or less,
   B: 0.0005 to 0.0050%,
   Ti: 0.0010 to 0.1000%,
   Nb: 0 to 0.2000%,
   V: 0 to 0.15%,
   Cr: 0 to 2.00%,
   Ni: 0 to 2.00%,
   Cu: 0 to 2.00%,
   Mo: 0 to 1.00%,
   W: 0 to 1.00%,
   Ca: 0 to 0.1000%,
   Mg: 0 to 0.100%,
   Zr: 0 to 0.100%,
   Hf: 0 to 0.100%,
   REM: 0 to 0.100% and
   a balance of Fe and impurities,
   a depth where an emission intensity Bx at a depth x ($\mu$m) and an emission intensity B150 at a depth of 150 $\mu$m measured by GDS measurement in a thickness direction of the steel sheet satisfy

$$Bx/B150 \geq 5.0 \ldots(1)$$

   is 0.5 $\mu$m or more from a surface of the steel sheet,
   a thickness of oxides formed on the surface of the steel sheet is 0.5 $\mu$m or less, and
   an internal oxidation layer of a thickness of 1.0 $\mu$m or more exists in a thickness direction of the steel sheet from the surface of the steel sheet.

2. The steel sheet of claim 1, wherein the depth where the emission intensity Bx and the emission intensity B 150 satisfy Bx/B 150 $\geq$ 5.0 is 2.0 $\mu$m or more from the surface of the steel sheet.

3. The steel sheet of claim 1, wherein, a maximum value Bmax of the emission intensity of B in a range from the surface of the steel sheet down to a depth of 5.0 $\mu$m measured by GDS measurement in the thickness direction of the steel sheet satisfies

$$Bmax/B150 \geq 8 \ldots(2)$$

4. A hot dip galvannealed steel sheet comprising a steel sheet according to any one of claims 1 to 3, and a hot dip galvannealed layer provided on at least part of the surface, wherein a thickness of the oxides formed on the surface of the hot dip galvannealed layer is 0.5 $\mu$m or less.

5. The hot dip galvannealed steel sheet according to claim 4, wherein the hot dip galvannealed layer comprises, by mass%, 0 to 1.5% of Al, 3 to 20% of Fe and a balance of Zn and impurities.

# Fig. 1

B CONCENTRATION

# Fig. 2

## INTERNATIONAL SEARCH REPORT

| International application No. |
|---|
| **PCT/JP2024/016968** |

**A. CLASSIFICATION OF SUBJECT MATTER**

*C22C 38/00*(2006.01)i; *C21D 9/46*(2006.01)i; *C22C 18/00*(2006.01)i; *C22C 18/04*(2006.01)i; *C22C 38/58*(2006.01)i;
*C23C 2/02*(2006.01)i; *C23C 2/06*(2006.01)i; *C23C 2/40*(2006.01)i; *B23K 11/16*(2006.01)n
FI: C22C38/00 301U; C22C38/00 301T; C22C38/58; C21D9/46 F; C21D9/46 J; C23C2/02; C23C2/06; C23C2/40;
C22C18/00; C22C18/04; B23K11/16 311

According to International Patent Classification (IPC) or to both national classification and IPC

**B. FIELDS SEARCHED**

Minimum documentation searched (classification system followed by classification symbols)

C22C38/00-38/60; C21D9/46-9/48; C23C2/00-2/40; C22C18/00-18/04; B23K11/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-504196 A (POSCO) 14 February 2019 (2019-02-14) claims, paragraphs [0023]-[0024], [0044] | 1-5 |
| A | JP 2011-231346 A (NISSHIN STEEL CO., LTD.) 17 November 2011 (2011-11-17) claims, paragraphs [0001]-[0008] | 1-5 |
| A | WO 2014/157155 A1 (NISSHIN STEEL CO., LTD.) 02 October 2014 (2014-10-02) claims, paragraphs [0006]-[0011] | 1-5 |
| A | WO 2023/132350 A1 (NIPPON STEEL CORPORATION) 13 July 2023 (2023-07-13) claims | 1-5 |
| P, A | WO 2024/053669 A1 (NIPPON STEEL CORPORATION) 14 March 2024 (2024-03-14) claims | 1-5 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 July 2024** | **23 July 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

### INTERNATIONAL SEARCH REPORT
**Information on patent family members**

International application No.

**PCT/JP2024/016968**

| Patent document cited in search report | | | Publication date (day/month/year) | Patent family member(s) | | | Publication date (day/month/year) |
|---|---|---|---|---|---|---|---|
| JP | 2019-504196 | A | 14 February 2019 | EP | 3392363 | A1 | |
| | | | | claims, paragraphs [0022]-[0023], [0043] | | | |
| | | | | US | 2018/0371570 | A1 | |
| | | | | WO | 2017/105064 | A1 | |
| | | | | CN | 108431273 | A | |
| JP | 2011-231346 | A | 17 November 2011 | (Family: none) | | | |
| WO | 2014/157155 | A1 | 02 October 2014 | EP | 2980259 | A1 | |
| | | | | claims, paragraphs [0006]-[0012] | | | |
| | | | | US | 2016/0024632 | A1 | |
| | | | | CN | 105051238 | A | |
| | | | | JP | 2014-208902 | A | |
| WO | 2023/132350 | A1 | 13 July 2023 | (Family: none) | | | |
| WO | 2024/053669 | A1 | 14 March 2024 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019116531 A

- WO 2020218575 A